# DEMANDE DE BREVET EUROPEEN

(11) **EP 4 275 484 A1**
(43) Date de publication de la demande: **15.11.2023**
(21) Numéro de dépôt: 23172680.3
(22) Date de dépôt: 10.05.2023
(51) Int. Cl.: A01G 17/06, A01G 13/02

(54) **DISPOSITIF TENDEUR POUR UN FILET ANTI-GRÊLE**

(30) Priorité: 10.05.2022 FR 2204390
(71) Demandeur: Profil Alsace, SAS, 67630 Niederlauterbach (FR)
(72) Inventeur: Billot, Hugues, 67630 Niederlauterbach (FR)
(74) Mandataire: Vièl, Frédérique

(57) **Abrégé**

L'invention concerne un dispositif tendeur pour filets de protection destiné à être placé sur un poteau. Il comprend :
- une embase (10) munie de moyens de serrage (106, 20) pour fixer le dispositif tendeur sur un poteau et divisée fictivement en deux par un plan de référence, et
- au moins un bras (30), de préférence deux, relié à l'embase, le ou les bras ayant deux extrémités, chaque bras étant relié à l'embase par sa première extrémité et étant muni de moyens d'accrochage de filet (313) à sa deuxième extrémité. Conformément à l'invention,
- chaque bras est articulé sur l'embase par des moyens d'articulation (111, 311) de sorte à être mobile par un mouvement de déplacement entre une position de repos et une position d'utilisation, de telle sorte qu'en position d'utilisation, les moyens d'accrochage de filet sont plus éloignés du plan de référence qu'en position de repos.

## Description

L'invention concerne un dispositif tendeur pour filets de protection et destiné à être placé sur un poteau faisant partie d'une rangée de poteaux.

En arboriculture et en viticulture, les arbres et les vignes sont palissés sur des fils tendus entre des poteaux plantés en rangées. Le palissage sert d'une part à soutenir les branches et d'autre part à augmenter la surface foliaire. Les arbres et les vignes poussent ainsi en rangées espacées les unes des autres par des allées laissant un passage pour les travailleurs ou les engins agricoles. Pour protéger les plantes contre les intempéries, on utilise de plus en plus souvent des filets de protection. Ces filets peuvent servir notamment de protection contre les rayons solaires, contre la grêle ou contre les oiseaux. Les filets de protection sont déployés de part et d'autre de chaque rangée. Ils sont généralement munis d'un fil de fixation sur leurs bords supérieur et inférieur pour permettre de les accrocher aux poteaux de palissage. Pour cela, les poteaux de palissage sont munis d'un dispositif d'accroche supérieur situé au-dessus de la partie de la végétation à protéger, et d'un dispositif tendeur situé en dessous de la partie des plantes à protéger. Il est en effet important que les filets soient tendus pour bien remplir leur rôle, notamment contre la grêle.

Il faut cependant pouvoir accéder aux vignes et aux arbres notamment pour les entretenir. Il faut donc que les filets puissent être facilement décrochés et repliés au moins le temps du traitement. Généralement, les filets sont décrochés en bas, enroulés ou repliés sur eux-mêmes, puis fixés en haut.

Il est préférable que les dispositifs tendeurs écartent les filets des plantes pour qu'ils prennent la forme d'une tente. Les dispositifs tendeurs sont donc généralement munis de deux bras perpendiculaires aux rangées. Ces bras débordent dans les allées et peuvent gêner le passage des engins agricoles ou être tordus ou endommagés en cas de choc avec un engin agricole.

L'objectif de l'invention est de remédier à cet inconvénient.

Cet objectif est atteint avec un dispositif tendeur selon l'invention. Ce dispositif tendeur comprend :
- une embase munie de moyens de serrage pour fixer le dispositif tendeur sur un poteau et divisée fictivement en deux par un plan de référence, et
- au moins un bras, de préférence deux, relié(s) à l'embase, le ou les bras ayant deux extrémités, chaque bras étant relié à l'embase par sa première extrémité et étant muni de moyens d'accrochage de filet à sa deuxième extrémité.
Conformément à l'invention,
- chaque bras est articulé sur l'embase par des moyens d'articulation de sorte à être mobile par un mouvement de déplacement entre une position de repos et une position d'utilisation, et inversement, de telle sorte que les moyens d'accrochage de filet, dans la position d'utilisation du ou des bras, sont plus éloignés du plan de référence que dans la position de repos. À l'état monté du dispositif tendeur sur un poteau d'une rangée de poteaux, le plan de référence coïncide avec la surface définie par la rangée de poteaux au niveau dudit poteau. Quand il y a deux bras, les moyens d'articulation du premier bras sont de préférence disposés d'un côté du plan de référence et ceux du deuxième bras de l'autre côté du plan de référence. Les moyens d'articulation peuvent comprendre des moyens d'articulation de bras placés sur le ou les bras, et des moyens d'articulation d'embase placés sur l'embase.

Les bras étant articulés sur l'embase, il est possible de les placer dans une position d'utilisation dans laquelle ils sont écartés de la surface définie par la rangée de poteaux en débordant dans les allées, ou dans une position de repos dans laquelle ils ne débordent pas, ou moins, dans les allées. La solution la plus simple est de concevoir le dispositif tendeur pour permettre un mouvement de déplacement du ou des bras sensiblement vertical, ou avec une composante verticale dominante, entre une position basse de repos et une position haute d'utilisation. De façon privilégiée, le dispositif est conçu de telle sorte qu'à l'état monté sur un poteau, le mouvement vertical du ou des bras est réalisé parallèlement à un plan vertical qui est perpendiculaire au plan de référence et qui passe par le poteau. Une autre solution est de concevoir le dispositif tendeur pour permettre un mouvement de déplacement du ou des bras sensiblement horizontal, ou du moins ayant une composante horizontale dominante, entre une position de repos rabattue et une position d'utilisation écartée. De façon privilégiée, le dispositif est alors conçu de telle sorte qu'à l'état monté sur un poteau, le mouvement horizontal du ou des bras est réalisé dans un plan horizontal ou pour le moins dans un plan perpendiculaire au poteau. Dans la position basse ou la position rabattue, les bras sont sensiblement alignés ou parallèles à la rangée de poteaux (et au plan de référence) et ne dépassent pas, ou que très peu, dans l'allée, tandis que dans la position haute ou la position écartée, ils sont placés transversalement à la rangée de poteaux (et au plan de référence) et dépassent beaucoup plus dans l'allée. Le ou les bras peuvent être retenus dans la position basse par exemple par leur seul poids. Dans une conception privilégiée, le ou les bras, dans la position d'utilisation, sont sensiblement orthogonaux à la surface définie par l'alignement des poteaux (et au plan de référence). Quand le dispositif est muni de deux bras, les moyens d'accrochage de filet du premier bras sont plus éloignés des moyens d'accrochage de filet du deuxième bras dans la position d'utilisation que dans la position de repos.

Grâce à l'invention, il est possible de mettre les bras en position d'utilisation où ils sont transversaux aux rangées et débordent dans les allées pour accrocher et tendre les filets, ou de les mettre en position de repos pour laisser le passage libre aux engins.

Dans une solution particulièrement simple, les moyens d'articulation comprennent des moyens de pivotement pour permettre au(x) bras de pivoter entre la position de repos et la position d'utilisation. Le mouvement de pivotement peut se faire autour d'un axe sensiblement horizontal, sensiblement parallèle à l'alignement des poteaux, ou peu incliné par rapport à cet alignement, de sorte à permettre un mouvement de déplacement entre une position basse et une position haute. Le mouvement de pivotement peut également se faire autour d'un axe sensiblement vertical parallèle aux poteaux pour permettre un mouvement de déplacement sensiblement horizontal entre une position rabattue et une position écartée.

Il est préférable de munir l'embase, pour chaque bras, d'une première butée pour limiter le déplacement dudit bras à la position d'utilisation. On empêche ainsi le bras de dépasser cette position d'utilisation, notamment dans un mouvement vertical. Il est également préférable de muni l'embase, pour chaque bras, d'une deuxième butée pour empêcher ou limiter un mouvement du bras transversalement au mouvement de déplacement dudit bras, notamment en direction opposée au poteau. On évite ainsi que les bras ne soient tirés vers le haut ou horizontalement sous l'effet de la tension du filet.

II peut être utile de munir le dispositif tendeur de moyens de maintien pour maintenir de façon réversible le ou les bras en position d'utilisation, notamment en position haute ou en position écartée. Les moyens de maintien sont de préférence conçus sous la forme d'un système par encliquetage ou sous la forme d'un pincement du ou des bras entre l'embase et un poteau. Ainsi, il est possible de mettre le ou les bras en position d'utilisation pour ensuite y fixer le filet sans qu'ils ne retournent en position de repos. Cela facilite la mise en place du filet. Ces moyens de maintien sont de préférence conçus pour maintenir de façon réversible le ou les bras en position d'utilisation contre l'effet de leur propre poids ou d'une tension du filet, par exemple sous l'effet du vent.

L'embase peut comprendre une branche centrale et deux branches transversales, les moyens d'articulation comprenant des moyens d'articulation d'embase placés sur la branche centrale. Chaque première butée, quand l'embase en est munie, peut être placée entre la branche centrale et l'une des branches latérales. Chaque deuxième butée, quand l'embase en est munie, peut être placée entre la branche centrale et l'une des branches latérales, et entre la branche centrale et la première butée quand l'embase est munie d'une première butée.

Chaque branche latérale peut être munie de premiers moyens de serrage conçus pour coopérer avec des deuxièmes moyens de serrage, les deuxièmes moyens de serrage étant conçus pour rapprocher les premiers moyens de serrage d'une branche latérale des premiers moyens de serrage de l'autre branche latérale. Les premiers moyens de serrage sont de préférence des crochets de serrage placés à l'extrémité des branches latérales ou à l'extrémité de branches d'extrémité placées à l'extrémité des branches latérales opposée à la branche centrale. Les deuxièmes moyens de serrage sont de préférence constitués d'une clavette munie d'un crochet de clavette conçu pour se crocheter sur l'un des crochets de serrage de l'embase et d'une section d'appui conçue pour prendre appui sur le deuxième crochet de serrage en vue de le rapprocher du premier crochet de serrage. La clavette est de plus munie d'une section de levier et de moyens de retenue pour la maintenir en position de serrage.

Très concrètement, le dispositif tendeur de l'invention peut être constitué de la façon suivante :
- L'embase peut être réalisée dans un fil métallique cintré qui peut présenter :
   - une branche centrale et
   - deux branches latérales placées transversalement à la branche centrale de sorte à former ensemble une pièce ayant une forme générale en U définissant un espace central,
   - deux anneaux réalisés par cintrage du fil métallique et constituant chacun des moyens d'articulation d'embase, les anneaux étant de préférence placés à l'intérieur de l'espace central,
   - deux premières déformations, de préférence en forme de U ou V allongé, chaque première déformation étant réalisée par cintrage du fil métallique entre la branche centrale et l'une des branches latérales, chaque première déformation s'étendant en s'écartant de l'espace central, chaque première déformation se trouvant en regard d'un anneau et constituant une première butée limitant le mouvement de déplacement d'un bras vers le haut,
   - deux secondes déformations, de préférence en forme de U ou de V, chaque seconde déformation étant réalisée par cintrage du fil métallique entre la branche centrale et une première butée, chaque seconde déformation s'étendant de préférence dans un plan sensiblement parallèle au plan défini par le mouvement de déplacement des bras,
   - deux crochets de serrage, chaque crochet de serrage étant placé à l'extrémité d'une branche latérale opposée à la branche centrale ou à l'extrémité d'une branche d'extrémité placée par son autre extrémité à l'extrémité des branches latérales opposée à la branche centrale, les crochets de serrage étant de préférence ouverts dans des directions opposées.
- Le dispositif tendeur peut comprendre deux bras, chaque bras étant réalisé dans un fil métallique cintré formant une tige munie à l'une de ses extrémités d'un crochet d'articulation pourvu d'une ouverture, et à son autre extrémité d'un crochet de filet, le crochet d'articulation faisant de préférence partie d'un segment de fil en forme de goupille, la tige ayant de préférence une forme non linéaire, notamment une forme en Z.
- L'embase peut être munie d'une clavette pouvant être réalisée dans un fil métallique cintré, la clavette pouvant comprendre :
   - un crochet de clavette conçu pour se crocheter sur un crochet de serrage de l'embase,
   - une section de serrage conçue pour venir en appui contre un deuxième crochet de serrage de l'embase en vue de le rapprocher du premier crochet de serrage,
   - une section de levier pour actionner la clavette et l'amener d'une position non serrée dans laquelle les deux crochets de serrage de l'embase sont plus éloignés à une position serrée dans laquelle les deux crochets de serrage de l'embase sont plus proches,
   - une section de retenue pour maintenir la clavette en position serrée et de préférence une section de verrouillage pour verrouiller la clavette dans la position serrée,
le crochet de clavette, la section de serrage et la section de levier étant de préférence dans un même plan et la section de retenue étant de préférence transversale audit plan et la section de verrouillage, quand la clavette en est munie, est de préférence transversale à la section de verrouillage et de préférence parallèle audit plan.

L'invention est décrite plus en détail ci-dessous à l'aide des figures qui montrent schématiquement :
[Fig. 1] : deux vues en perspective du dispositif de l'invention monté sur un poteau, les deux bras étant en position basse, (a) vue de devant et (b) vue de derrière ;
[Fig. 2] : une vue de face du dispositif de la figure 1, un bras étant en position haute, l'autre en position basse ;
[Fig. 3] : l'embase (a) vue en perspective, (b) vue de dessus, (c) vue de face, et (d) vue de côté ;
[Fig. 4] : la clavette (a) vue de côté et (b) vue de face ;
[Fig. 5] : un bras vu de face ;
[Fig. 6] : une vue de dessus du dispositif (sans la clavette pour une meilleure visibilité), les deux bras étant en position haute ;
[Fig. 7] : une vue agrandie de face montrant la coopération entre l'embase, le poteau et le bras en position haute.

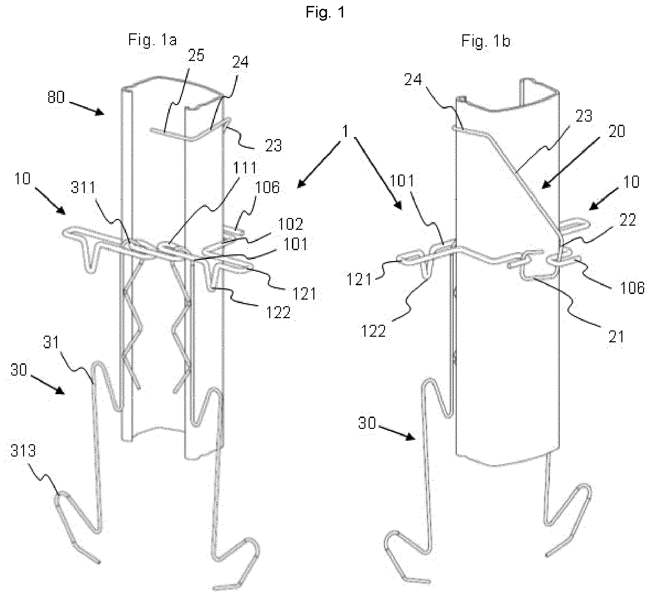

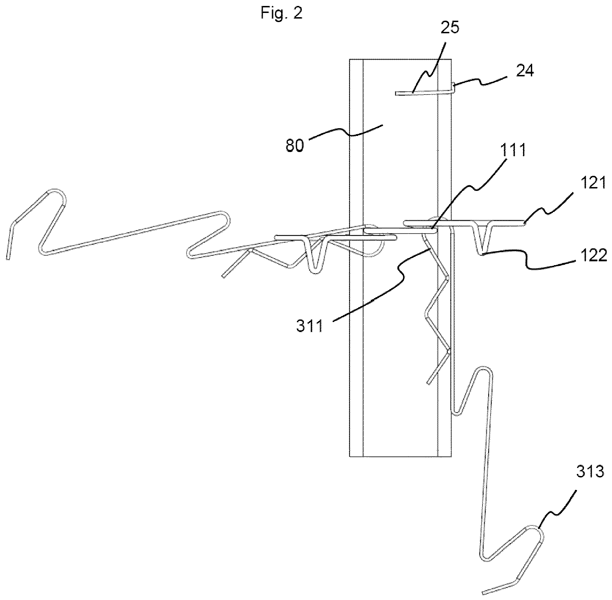

Le dispositif de l'invention est destiné à être monté sur un poteau, tel qu'un poteau de viticulture ou d'arboriculture. Les figures 1 et 2 notamment, montrent le dispositif monté sur un poteau pour une utilisation conforme à l'invention. Les références spatiales utilisées dans la description, telle que supérieur/inférieur, haut/bas, vertical/horizontal, devant/derrière se réfèrent à la position prise par la pièce décrite quand le dispositif tendeur est monté sur un poteau, comme montré par exemple sur les figures 1a et 2. Les termes transversal et transversalement indiquent que l'élément considéré est incliné par rapport à l'élément de référence, sans nécessairement lui être perpendiculaire ou orthogonal.

Un filet anti-grêle est généralement fixé à poste dans la partie haute des poteaux viticoles ou arboricole. Il est déployé de part et d'autre de la rangée de vigne ou d'arbres et tendu en le fixant à un dispositif tendeur placé dans la partie basse des poteaux.

Le dispositif tendeur présenté ici à titre d'exemple a deux bras qui pivotent selon un mouvement de rotation sensiblement vertical entre une position basse de repos visible sur la figure 1 et la partie droite de la figure 2 par exemple, et une position haute d'utilisation visible sur la partie gauche de la figure 2. Le dispositif tendeur pourrait n'avoir qu'un seul bras. Par ailleurs, le mouvement de déplacement pourrait être sensiblement horizontal entre une position de repos rabattu dans l'alignement de la rangée de poteaux et une position d'utilisation écartée. D'autres directions de mouvement (incliné par exemple) et/ou d'autres types de mouvement (translation) pourraient être envisagés.

Le dispositif tendeur (1) présenté ici est constitué de quatre pièces :
- une embase (10),
- une clavette (20) pour fixer l'embase (10) sur un poteau (80), et
- deux bras (30) articulés sur l'embase (le dispositif peut fonctionner également avec un seul bras).

Ces quatre pièces (10, 20, 30) sont par exemple des pièces en fil métallique, notamment en fil d'acier.

Les bras (30) sont constitués d'une tige (31) munie à une première extrémité de moyens d'articulation de bras et à la deuxième extrémité de moyens d'accroche d'un filet. Dans l'exemple présenté ici, les bras sont constitués d'un fil métallique cintré formant une pièce en deux dimensions.

Les moyens d'articulation de bras sont destinés à coopérer avec des moyens d'articulation d'embase (111) décrits plus bas pour fixer de façon articulée les bras (30) à l'embase (10). Ces moyens d'articulation de bras sont constitués par exemple d'un crochet d'articulation constitué d'un anneau (311) présentant une ouverture d'accès (311a). L'ouverture d'accès (311a) peut être fermée en position normale du bras et ne s'ouvrir qu'au moment du montage du bras sur l'embase, par exemple par déformation élastique. Pour sécuriser le bras sur l'embase, cet anneau (311) peut faire partie d'un segment en forme de goupille (312).

Les moyens d'accroche du filet peuvent se présenter sous la forme d'un crochet de filet (313) présentant une ouverture d'accès (313a). Le crochet de filet est conçu de telle sorte que, quand les bras sont en position haute d'utilisation, les crochets de filet soient ouverts vers le bas ou les côtés, ou en tout cas, que les crochets de filet soient fermés vers le haut pour retenir le bas du filet tendu qui subit une traction vers le haut. Si l'ouverture du crochet de filet peut être fermée en résistant à la traction subie par le filet tendu, alors sa position n'a pas d'importance. Dans l'exemple de réalisation présenté ici, l'ouverture d'accès (313a) du crochet de filet (313) se trouve du même côté de la tige (31) que l'ouverture d'accès (311a) de l'anneau (311) des moyens d'articulation de bras.

Afin de conférer aux bras une certaine résistance à la déformation lors des travaux viticoles ou arboricoles, il est préférable de donner à la tige une forme non rectiligne lui permettant de se déformer élastiquement lors du passage des machines alors que les bras sont toujours en position d'utilisation. On pourra par exemple donner à une section centrale (314) de la tige une forme en Z comme dans l'exemple présenté dans les figures.

L'embase (10) comprend plusieurs tronçons, notamment :
- une branche centrale (101) ayant deux extrémités,
- deux branches latérales (102) placées chacune à la suite d'une extrémité de la branche centrale, et
- deux branches d'extrémités (103) placées chacune à la suite d'une branche latérale à l'opposé de la branche centrale.

Un plan de référence (P1) divise fictivement l'embase (10) en deux parties qui sont symétriques dans le présent exemple. À l'état monté du dispositif tendeur sur un poteau d'une rangée de poteaux, ce plan de référence (P1) coïncide au niveau du poteau avec la surface définie par la rangée de poteaux.

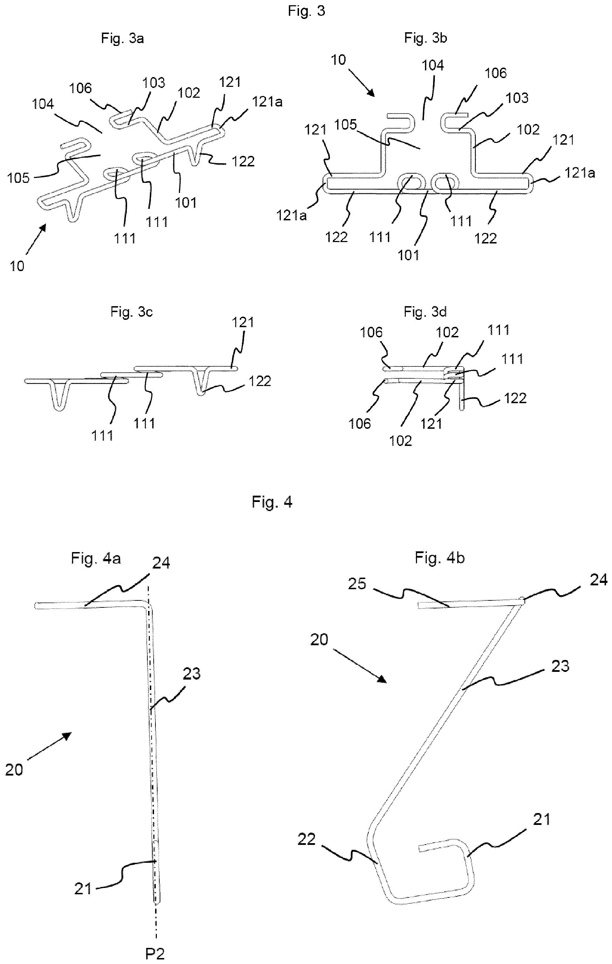

Les deux branches latérales (102) sont placées transversalement à la branche centrale (101), de sorte que ces trois tronçons confèrent à l'embase, vue de dessus, une forme générale en U. Les branches d'extrémités (103) sont elles-mêmes placées transversalement aux branches latérales (102) qu'elles prolongent, et tendent à refermer l'embase sur elle-même tout en laissant une ouverture (104) permettant le montage de l'embase sur un poteau (80). Ainsi, l'embase a, vue de dessus, une forme générale en C bien visible sur la figure 3b.

La branche centrale (101), les branches latérales (102) et les branches d'extrémité (103) définissent un espace central (105) à l'intérieur du C et sont dimensionnées pour que cet espace central puisse recevoir un poteau (80), tel qu'un poteau de viticulture ou d'arboriculture. Dans l'exemple présenté dans les figures, l'espace central (105) à l'intérieur de l'embase est dimensionné pour un poteau à section rectangulaire. Les branches, vue de dessus, sont dans l'ensemble rectilignes. Cependant, la forme des branches peut être adaptée à la forme du poteau. Si le poteau est de section circulaire, les branches pourront, vues de dessus, être courbées. Si le poteau est de section hexagonale ou octogonale, les branches pourront présenter un ou plusieurs angles.

Les branches d'extrémité (103) sont munies chacune de premiers moyens de serrage, permettant de fixer fermement l'embase (10) sur le poteau (80). Dans l'exemple présenté ici, les premiers moyens de serrage comprennent deux crochets de serrage (106) réalisés dans le prolongement des branches d'extrémité (103) et ouverts dans des directions opposées. En les rapprochant, on resserre l'ouverture (104) de l'embase en serrant l'embase contre le poteau. Alors que l'embase ouverte peut facilement coulisser le long du poteau, permettant ainsi sa mise en place correcte, l'embase serrée par les moyens de serrage ne peut pas coulisser sous l'effet des forces exercées par un filet tendu, même en cas d'intempéries. La clavette (20), décrite plus bas, sert de seconds moyens de serrage pour rapprocher les deux extrémités de l'embase.

Des moyens d'articulation d'embase sont prévus sur la branche centrale (101). Ces moyens d'articulation d'embase coopèrent avec les moyens d'articulation de bras (311) pour fixer de façon articulée les bras (30) sur l'embase (10). Les moyens d'articulation d'embase et les moyens d'articulation de bras constituent ensemble les moyens d'articulation. Dans l'exemple présenté sur les figures, les moyens d'articulation d'embase sont constitués chacun par un anneau (111). Cet anneau peut être une pièce rapportée fixée sur l'embase, ou plus simplement comme dans le présent exemple formé par cintrage du fil métallique de l'embase, au niveau de la branche centrale (101). De préférence, les anneaux (111) s'étendent dans un plan sensiblement horizontal et sont placés dans l'espace central (105) à l'intérieur du C. Si le poteau sur lequel est monté le dispositif tendeur est ouvert, comme dans le cas présenté ici, les anneaux peuvent pénétrer en partie dans l'espace intérieur du poteau. Ils peuvent notamment être en appui sur les bords (81) de l'ouverture du poteau et contribuer au serrage de l'embase sur le poteau. Ils contribuent également à laisser un espace entre la branche centrale (101) et les bords (81) du poteau pour le mouvement de déplacement des bras et leur maintien pincé en position d'utilisation.

Deux premières butées sont prévues sur l'embase pour limiter le mouvement des bras (30) vers le haut, notamment sous l'effet de la tension du filet. Ces premières butées peuvent être des pièces rapportées, ou plus simplement être formées par cintrage du fil métallique constituant l'embase. Dans le présent exemple de réalisation, chaque première butée est constituée par une première déformation (121), ici en forme de U allongé, réalisée avec le fil métallique entre la branche centrale (101) et l'une des branches latérales (102). Les déformations s'étendent sensiblement horizontalement vers l'extérieur par rapport à la forme générale en C de l'embase, donc en s'écartant de l'espace central (105). Chaque fond de U (121a) constitue une première butée. L'inclinaison de la déformation définit la limite du mouvement vers le haut des bras. Dans l'exemple de réalisation, le mouvement est limité à une position sensiblement horizontale correspondant à un écartement maximum, ou presque maximum, des crochets de filet (313). Chaque déformation en U (121) se trouve en regard de l'anneau (111) constituant les moyens d'articulation d'embase.

Deux secondes butées sont prévues sur l'embase pour limiter le mouvement des bras vers l'avant quand ils sont en position haute, notamment sous l'effet d'un choc dû au passage d'un engin agricole ou sous l'effet du vent. Ces secondes butées peuvent être des pièces rapportées, ou plus simplement être formées par cintrage du fil métallique constituant l'embase. Dans le présent exemple de réalisation, chaque seconde butée est constituée par une seconde déformation (122), ici en forme de V, réalisée avec le fil métallique entre les premiers moyens d'articulation d'embase (l'anneau 111) et la première butée (121) correspondante. Chaque seconde butée s'étend sensiblement verticalement vers le bas. Les branches du V constituent la seconde butée.

La clavette (20) sert de seconds moyens de serrage pour resserrer l'embase sur le poteau en rapprochant l'une de l'autre les deux branches d'extrémité. Pour cela, la clavette (20) est destinée à coopérer avec les premiers moyens de serrage de l'embase. Dans l'exemple présenté ici, les seconds moyens de serrage sont constitués par un crochet de clavette (21), pouvant être ouvert, qui est destiné à se crocheter un premier crochet de serrage (106). Le crochet de clavette (21) se poursuit par une section de serrage (22) destinée à pénétrer dans le deuxième crochet de serrage (106) de l'embase et à le rapprocher du premier, puis par une section de levier (23) pour pouvoir exercer une force suffisante pour assurer un serrage efficace. Le crochet de clavette (21), la section de serrage (22) et la section de levier (23) sont placés sensiblement dans un même plan (P2) parallèle à la feuille de la figure 4b. La clavette est également munie de moyens de retenue pour la retenir en position serrée. Dans le présent exemple, les moyens de retenue sont constitués par une section de retenue (24) conçue pour prendre appui contre la face du poteau située du côté du premier crochet de serrage (106) de l'embase crocheté par la clavette. Dans l'exemple des figures, la section de retenue (24) est sensiblement perpendiculaire au plan (P2). La coopération des crochets de serrage (106), du crochet de clavette (21), de la section de serrage (22), de la section de levier (23) et de la section de retenue (24) est bien visible sur la figure 1b. On peut encore prévoir une section de verrouillage (25) qui est sensiblement parallèle au plan (P2) et destinée à prendre appui contre la face avant du poteau comme cela est bien visible sur la figure 1a.

Le montage du dispositif tendeur (1) de l'invention, et son installation sur un poteau est décrit ci-dessous.

Les bras (30) sont montés sur l'embase en faisant passer un anneau (311) de bras dans l'un des anneaux (111) de l'embase. Pour cela, on peut introduire l'extrémité libre de la partie en forme de goupille dans l'anneau (311) de l'embase.

L'embase (10) munie de ces deux bras (30) est passée autour d'un poteau (80) et coulissée dessus jusqu'à ce qu'elle ait atteint la hauteur souhaitée. La clavette (20) est alors crochetée avec son crochet de clavette (21) sur le premier crochet de serrage (106) de l'embase. La clavette (20) est ensuite pivotée tangentiellement au dos (face arrière) du poteau de sorte à faire passer la section d'appui (22) dans le deuxième crochet de serrage (106) de l'embase. Le mouvement de pivotement se poursuit tout en faisant passer la section de retenue (24) et la section de verrouillage (25) derrière le poteau jusqu'à ce que ceux-ci contournent le poteau et viennent en appui contre la face latérale et la face avant du poteau respectivement. Durant le mouvement de pivot de la clavette, le deuxième crochet de serrage (106) de l'embase glisse contre la section de serrage (22) en se rapprochant du premier crochet de serrage (106) de l'embase. La section de serrage (22) est dimensionnée de telle sorte qu'à la fin du mouvement de pivotement et de verrouillage, l'embase soit suffisamment serrée contre le poteau et qu'elle ne puisse plus coulisser dessus sans que ne soit exercée une force très supérieure à la force exercée par un filet sous tension.

Le fonctionnement du dispositif tendeur (1) de l'invention monté sur un poteau est décrit plus en détail ci-dessous.

En position basse de repos, les bras (30) pendent vers le bas sous l'effet de leur poids. Ils sont donc sensiblement verticaux et ne dépassent pas, ou que très peu, du poteau en direction de l'allée. Dans l'exemple de réalisation de l'invention, il est possible de rentrer au moins leurs extrémités libres à l'intérieur du poteau, de sorte qu'ils ne dépassent pas des bords latéraux du poteau. En position de repos, les bras ne gênent donc pas les engins agricoles passant dans les allées entre les rangées d'arbres ou de vignes.

Les bras peuvent pivoter pour être redressés et permettre de tendre un filet de protection accroché dans une partie supérieure du poteau. En pivotant vers le haut, chaque bras passe devant la seconde déformation formant la seconde butée (122). Le mouvement de pivotement des bras est limité vers le haut par les premières butées (121) contre lesquelles prennent appui les tiges (31) des bras.

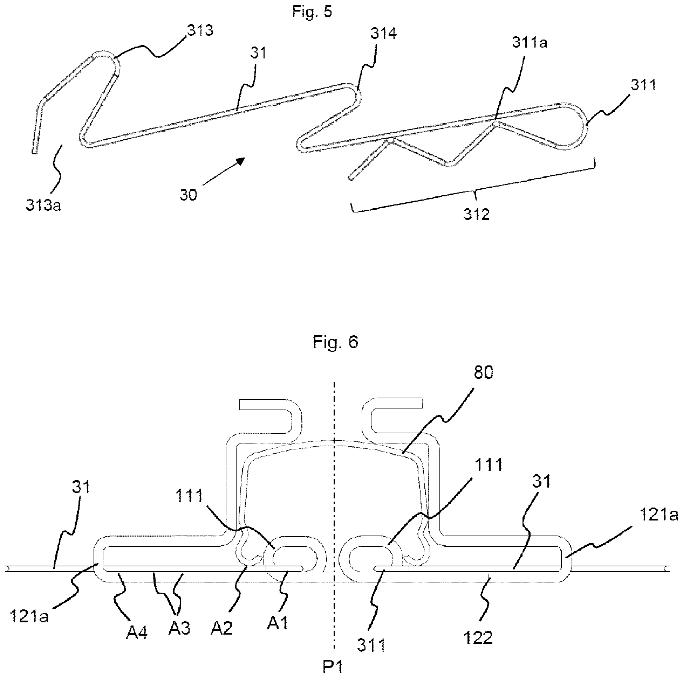

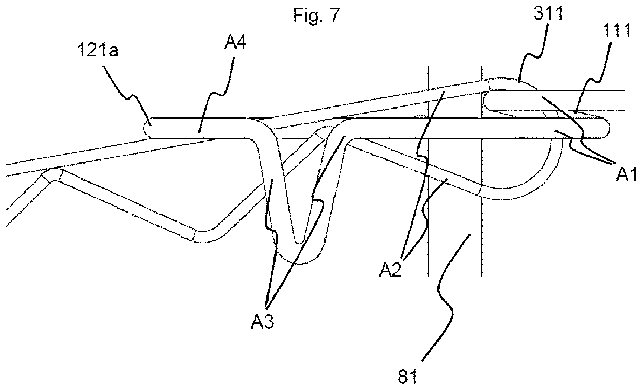

Par ailleurs, suite au serrage de l'embase (10) sur le poteau (80), chaque bras en position haute (30) est pincé d'une part contre le poteau, ici en deux points (A2) sur le bord roulé (81) du poteau, et d'autre part d'un côté contre la branche centrale (101) au niveau des anneaux (111), ici le point (A1), et de l'autre côté au niveau des secondes butées (122), ici les points (A3), voire contre la branche avant des premières déformations (121), ici les points (A4). Ces points d'appui sont bien visibles sur les figures 6 et 7. Les contacts avec la deuxième butée (122) aux points (A3) se font au niveau de la branche retour de la section en forme de goupille (312). Il serait également possible de cintrer la tige (31) pour que le contact se fasse entre le crochet d'articulation (311) et le crochet de filet (313). Ce pincement est juste suffisant pour maintenir les bras en position haute contre l'effet de leur propre poids. Il est cependant suffisamment faible pour permettre de monter et descendre facilement les bras. Ce pincement constitue des moyens de maintien.

Quand les bras sont en position d'utilisation, il est possible d'attacher le bas du filet, par exemple en faisant passer son liseré ou le fil passant en bas du filet dans les crochets de filet (313) des bras.

Du fait des secondes butées (122), les bras ne peuvent pas être rabattus vers l'avant. De même, ils ne peuvent pas être rabattus vers l'arrière du fait qu'ils sont en appui d'une part contre la branche centrale au niveau de l'anneau (111) et du point (A1) et d'autre part contre le poteau au niveau des points d'appui (A2).

Du fait de leur forme en Z, les bras ont une certaine souplesse qui leur permet de se déformer élastiquement en cas de choc avec un engin agricole.

L'exemple de réalisation présenté sur les figures n'est pas limitatif. De nombreuses modifications peuvent y être apportées sans modifier son fonctionnement.

Du fait de l'enroulement identique des deux anneaux (111), les deux branches latérales (102) et les deux premières butées (121a) ne sont pas dans le même plan comme cela est bien visible sur les figures 3c et 3d. Par conséquent, en position d'utilisation, le crochet de filet (313) droit est légèrement plus haut que le crochet de filet (313) gauche (quand on considère le dispositif de face, comme sur la figure 2). Il aurait été possible d'enrouler les deux anneaux (111) de sorte que les deux branches latérales (102) et les deux premières butées (121a) soient dans le même plan et que les positions d'utilisation soient les mêmes des deux côtés.

Par exemple, les moyens d'articulation peuvent prendre n'importe quelle forme permettant de fixer les bras sur l'embase de façon pivotante ou non. Plutôt que de crocheter le bras sur l'embase, on pourrait notamment crocheter l'embase sur le bras, par exemple en prévoyant l'ouverture de l'anneau sur l'embase plutôt que sur le bras.

Les bras sont de préférence maintenus en position haute pour faciliter l'accroche du bas du filet. Pour cela, on a prévu des moyens de maintien sous la forme du pincement des bras entre l'embase et le poteau. Cependant, d'autres moyens de maintien en position haute pourraient être prévus, comme un système d'encliquetage. Ces moyens de maintien ne sont pas indispensables et il est possible d'y renoncer.

Les moyens de serrage se présentent ici sous la forme de deux crochets de serrage (106) placés à l'extrémité des branches d'extrémité (103) et coopérant avec la clavette (20). Cependant, il serait possible de renoncer aux branches d'extrémité (103) et de placer ces crochets de serrage à l'extrémité des branches latérales (102). De même, il serait possible de prévoir un autre système de serrage, par exemple par une bride vissée.

Quand les poteaux sont ronds notamment, il est possible de prévoir une troisième butée pour empêcher un mouvement vers l'arrière des bras. Cette troisième butée peut être constituée par la branche arrière du U formant la première butée (121), ou par une troisième déformation par exemple de cette branche arrière de la première butée.

### Références :

- 1: Dispositif
- 10: Embase
101 Branche centrale
102 Branches latérales
103 Branche d'extrémité
104 Ouverture de l'embase
105 Espace central
106 1^{ers} Moyens de serrage (crochets de serrage)
111 Moyens d'articulation d'embase
121 1^{ères} butées de déplacement vertical
121a Fond du U formant butée
122 2^{ndes} butées de déplacement horizontal
- 20: Clavette
21 Crochet de clavette
22 Section d'appui
23 Section de levier
24 Section de retenue
25 Section de verrouillage
- 30: Bras
31 Tige
311 Moyens d'articulation de bras
311a Ouverture d'accès
312 Section en forme de goupille
313 Moyens d'accroche d'un filet (crochet de filet)
313a Ouverture du crochet de filet
314 Section centrale en Z
80 Poteau
81 Bord roulé du poteau
- P1: Plan de référence
- P2: Plan d'une partie de la clavette
- A1, A2, A3, A4: Points de pincement

## Revendications

1. Dispositif tendeur (1) pour filets de protection destiné à être placé sur un poteau faisant partie d'une rangée de poteaux, lequel dispositif tendeur comprend :
- une embase (10) munie de moyens de serrage (106, 20) pour fixer le dispositif tendeur (1) sur un poteau (80) et divisée fictivement en deux par un plan de référence (P1), et
- au moins un bras (30), de préférence deux, relié à l'embase, le ou les bras ayant deux extrémités, chaque bras étant relié à l'embase par sa première extrémité et étant muni de moyens d'accrochage de filet (313) à sa deuxième extrémité,
**caractérisé en ce que**
- chaque bras (30) est articulé sur l'embase par des moyens d'articulation (111, 311) de sorte à être mobile par un mouvement de déplacement entre une position de repos et une position d'utilisation, de telle sorte qu'en position d'utilisation, les moyens d'accrochage de filet (313) sont plus éloignés du plan de référence (P1) qu'en position de repos.

2. Dispositif tendeur (1) selon la revendication 1, **caractérisé en ce que**
- le dispositif est conçu pour que le mouvement de déplacement du ou des bras soit sensiblement vertical, ou avec une composante verticale dominante, entre une position basse de repos et une position haute d'utilisation, ou **en ce que**
- le dispositif est conçu pour que le mouvement de déplacement du ou des bras soit sensiblement horizontal, ou avec une composante horizontale dominante, entre une position de repos rabattue et une position d'utilisation écartée.

3. Dispositif tendeur (1) selon la revendication 1 ou 2, **caractérisé en ce que** les moyens d'articulation (111, 311) comprennent des moyens de pivotement pour permettre au(x) bras de pivoter entre la postions de repos et la position d'utilisation.

4. Dispositif tendeur (1) selon l'une des revendications précédentes, **caractérisé en ce que** l'embase est munie pour chaque bras d'une butée, appelée première butée (121), pour limiter le mouvement de déplacement dudit bras à la position d'utilisation, notamment le mouvement vers le haut dudit bras.

5. Dispositif tendeur (1) selon l'une des revendications précédentes, **caractérisé en ce que** l'embase est munie pour chaque bras d'une deuxième butée (122) pour empêcher ou limiter un mouvement du bras transversalement au mouvement de déplacement dudit bras, notamment en direction opposée au poteau.

6. Dispositif tendeur (1) selon l'une des revendications précédentes, **caractérisé en ce que** le dispositif tendeur est muni de moyens de maintien pour maintenir de façon réversible le ou les bras en position d'utilisation, les moyens de maintien étant de préférence conçus sous la forme d'un système par encliquetage ou sous la forme d'un pincement du ou des bras entre l'embase et un poteau.

7. Dispositif tendeur (1) selon l'une des revendications précédentes, **caractérisé en ce que**
- l'embase (1) comprend une branche centrale (101) et deux branches transversales (102), des moyens d'articulation d'embase (111) étant placés sur la branche centrale (101),
- chaque première butée (121), quand l'embase en est munie, est placée entre la branche centrale (101) et l'une des branches latérales (102),
- chaque deuxième butée (122), quand l'embase en est munie, est placée entre la branche centrale (101) et l'une des branches latérales (102), et entre la branche centrale (101) et la première butée (121) quand l'embase est munie d'une première butée.

8. Dispositif tendeur (1) selon la revendication précédente, **caractérisé en ce que**
- chaque branche latérale (102) est munie de premiers moyens de serrage (106) conçus pour coopérer avec des deuxièmes moyens de serrage (20), les deuxièmes moyens de serrage étant conçus pour rapprocher les premiers moyens de serrage (106) d'une branche latérale des premiers moyens de serrage (106) de l'autre branche latérale,
- les premiers moyens de serrage étant de préférence des crochets de serrage (106) placés à l'extrémité des branches latérales (102) ou à l'extrémité de branches d'extrémité (103) placées à l'extrémité des branches latérales (102) opposée à la branche centrale (101) et
- les deuxièmes moyens de serrage étant de préférence constitués d'une clavette (20) munie d'un crochet de clavette (21) conçu pour se crocheter sur l'un des crochets de serrage de l'embase et d'une section d'appui (22) conçue pour prendre appui sur le deuxième crochet de serrage (106) en vue de le rapprocher du premier crochet de serrage (106), la clavette (20) étant de plus munie d'une section de levier (23) et de moyens de retenue (24) pour la maintenir en position de serrage.

9. Dispositif tendeur (1) selon l'une des revendications précédentes, **caractérisé**
- **en ce que** l'embase (10) est réalisée dans un fil métallique cintré qui présente :
- une branche centrale (101) et
- deux branches latérales (102) placées transversalement à la branche centrale de sorte à former ensemble une pièce ayant une forme générale en U définissant un espace central (105),
- deux anneaux (111) réalisés par cintrage du fil métallique et constituant chacun des moyens d'articulation d'embase, les anneaux étant de préférence placés à l'intérieur de l'espace central (105),
- deux premières déformations (121), de préférence en forme de U ou V allongé, chaque première déformation étant réalisée par cintrage du fil métallique entre la branche centrale (101) et l'une des branches latérales (102), chaque première déformation s'étendant en s'écartant de l'espace central (105), chaque première déformation (121) se trouvant en regard d'un anneau (111) et constituant une première butée limitant le mouvement de déplacement d'un bras vers le haut,
- deux secondes déformations (122), de préférence en forme de U ou de V, chaque seconde déformation étant réalisée par cintrage du fil métallique entre la branche centrale (101) et une première butée (121), chaque seconde déformation s'étendant de préférence dans un plan sensiblement parallèle au plan défini par le mouvement de déplacement des bras,
- deux crochets de serrage (106), chaque crochet de serrage étant placé à l'extrémité d'une branche latérale (102) opposée à la branche centrale (101) ou à l'extrémité d'une branche d'extrémité (103) placée par son autre extrémité à l'extrémité des branches latérales (102) opposée à la branche centrale (101), les crochets de serrage (106) étant de préférence ouverts dans des directions opposées ; et/ou
- **en ce que** le dispositif tendeur (1) comprend deux bras (30), chaque bras étant réalisé dans un fil métallique cintré formant une tige (31) munie à l'une de ses extrémités un crochet d'articulation (311) pourvu d'une ouverture et à son autre extrémité d'un crochet de filet (313), le crochet d'articulation faisant de préférence partie d'un segment de fil en forme de goupille (312), la tige (31) ayant de préférence une forme non linéaire, notamment une forme en Z ; et/ou
- **en ce que** l'embase est munie d'une clavette (20) réalisée dans un fil métallique cintré, la clavette comprenant :
- un crochet de clavette (21) conçu pour se crocheter sur un crochet de serrage (106) de l'embase,
- une section de serrage (22) conçue pour venir en appui contre un deuxième crochet de serrage (106) de l'embase en vue de le rapprocher du premier crochet de serrage,
- une section de levier (23) pour actionner la clavette et l'amener d'une position non serrée dans laquelle les deux crochets de serrage (106) de l'embase sont écartés à une position serrée dans laquelle les deux crochets de serrage (106) de l'embase sont rapprochés,
- une section de retenue (24) pour maintenir la clavette en position serrée et de préférence une section de verrouillage (25) pour verrouiller la clavette dans la position serrée,
le crochet de clavette (21), la section de serrage (22) et la section de levier (23) étant de préférence dans un même plan (P2) et la section de retenue étant de préférence transversale audit plan (P2) et la section de verrouillage, quand la clavette en est munie, est de préférence transversale à la section de verrouillage et de préférence parallèle audit plan (P2).
